# EUROPÄISCHE PATENTSCHRIFT

(11) **EP 1 119 795 B1**
(45) Veröffentlichungstag und Bekanntmachung des Hinweises auf die Patenterteilung: **18.12.2002**
(21) Anmeldenummer: 99959186.0
(22) Anmeldetag: 06.10.1999
(51) Int. Cl.: G02F 1/313, G02B 6/34

(54) **OPTISCHER FILTER, ABSTIMMBARES ADD-DROP-CONTINUE-MODUL UND SCHALTUNGSANORDNUNG FÜR GEBÜNDELTE CROSS-CONNECT-FUNKTIONALITÄT**
OPTICAL FILTER, ADJUSTABLE ADD-DROP-CONTINUE MODULE AND CIRCUIT FOR BUNDLED CROSS-CONNECT FUNCTIONALITY
FILTRE OPTIQUE, MODULE D'INSERTION-EXTRACTION-SUITE REGLABLE ET CONFIGURATION DE CIRCUIT POUR FONCTIONNALITE D'INTERCONNEXION EN FAISCEAUX

(30) Priorität: 09.10.1998 DE 19846674; 25.08.1999 DE 19940302
(43) Veröffentlichungstag der Anmeldung: 01.08.2001
(73) Patentinhaber: SIEMENS AKTIENGESELLSCHAFT, 80333 München (DE)
(72) Erfinder: STOLL, Detlef, D-81377 München (DE); STORTZ, Gerhard, D-85586 Poing (DE); LEISCHING, Patrick, D-80802 München (DE); SCHEERER, Christian, D-81375 München (DE); BOCK, Harald, D-81479 München (DE)
(86) Internationale Anmeldenummer: DE9903227
(87) Internationale Veröffentlichungsnummer: WO00022479

(56) Entgegenhaltungen:
- EP-A- 0 854 378
- WO-A-98/04954
- WO-A-99/42893
- US-A- 5 408 319
- US-A- 5 706 375
- US-A- 5 963 685

## Beschreibung

Die Erfindung betrifft ein abstimmbares optisches Filter nach Anspruch 1 und einen mit diesem Filter realisierten Add-Drop-Continue-Modul nach Anspruch 9, eine Add-Drop-Continue-Einrichtung sowie eine Schaltungsanordnung für gebündelte Cross-Connect-Funktionalität.

Um eine möglichst störungsfreie Signalübertragung zu gewährleisten, werden optische Wellenlängenmultiplex-Netze (WDM-Netze) redundant ausgeführt. Häufig werden Ringstrukturen vorgesehen. Bei Übergängen zwischen unterschiedlichen Ringen wird mit "Drop-and-Continue"-Funktionen gearbeitet, d.h., das Signal wird aufgesplittet und sowohl im ursprünglichen Ring weiter gesendet als auch in den neuen Ring übergeleitet. Zur rein optischen Realisierung einer Drop-and-Continue-Funktion können Wellenlängen-Demultiplexer, optische Schalter und Wellenlängen-Multiplexer eingesetzt werden.

Zur Realisierung von Add-Drop-Funktionen sind Module der Firma High Wave Technologies bekannt, die aus zwei Zirkulatoren mit zwischengeschalteten abstimmbaren Filtern bestehen. Bei einer Abstimmung wegen einer Konfigurationsänderung werden jedoch bei der Neuabstimmung eines WDM-Kanals in der Regel die Signale anderer WDM-Kanäle gestört. Für Drop-and-Continue-Funktionen sind diese Module nicht vorgesehen. Es ist jedoch denkbar, dieses Modul mit Splittern und Schaltern zu ergänzen, um die Drop-and-Continue-Funktion zu realisieren.

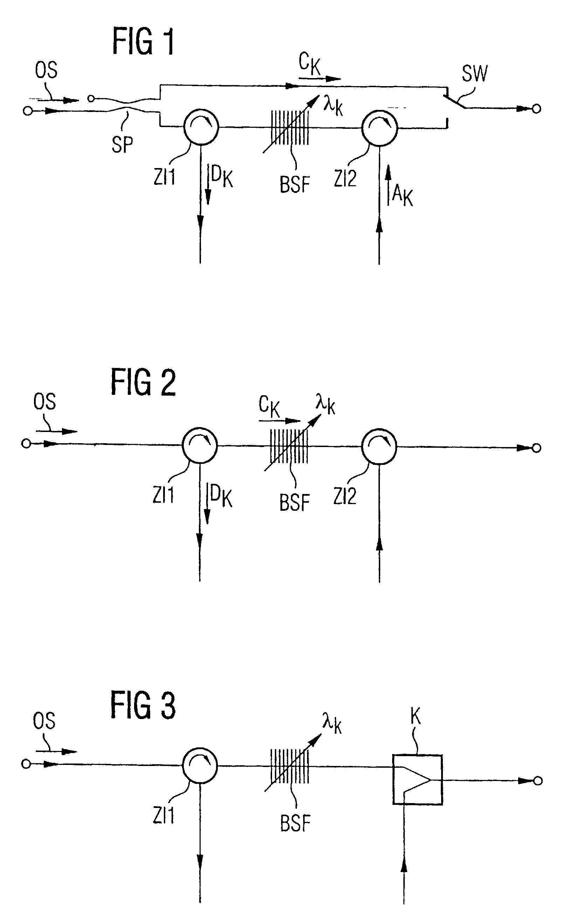

In **Figur 1** ist ein solcher "Add-Drop-Continue-Modul" dargestellt. Er besteht aus einem Splitter SP, der das optische Signal in zwei etwa gleich starke Signale aufteilt. Der eine Anteil wird über zwei Zirkulatoren mit einem dazwischen geschalteten abstimmbaren Filter geführt. Zur Realisierung der Drop-and-Continue-Funktion wird über den ersten Zirkulator der eine Signalanteil Dₖ abgezweigt und der andere Signalanteil Cₖ über einen optischen Schalter SW weitergeleitet (dargestellte Schalterstellung).

Bei einer Add-Drop-Funktion wird ebenfalls der eine Signalanteil Dₖ abgezweigt, aber gleichzeitig ein neues Signal Aₖ mit derselben Wellenlänge über den zweiten Zirkulator ZI2 eingefügt. Durch die Verwendung des optischen Splitters weist das Modul grundsätzlich eine Dämpfung von mind. 3 dB auf. Entsprechend der Anzahl von Add-Drop-Funktionen wird das beschriebene Add-Drop-Element mehrfach in Reihe geschaltet, wodurch sich die Dämpfung noch erheblich erhöht.

Die Cross-Connect-Funktionalität in optischen Mehrwellenlängenmultiplexsystemen (WDM) wird benötigt, um ein bestimmtes Wellenlängensignal eines einlaufenden Mehrwellenlängensignals in jede beliebige Richtung verteilen zu können.

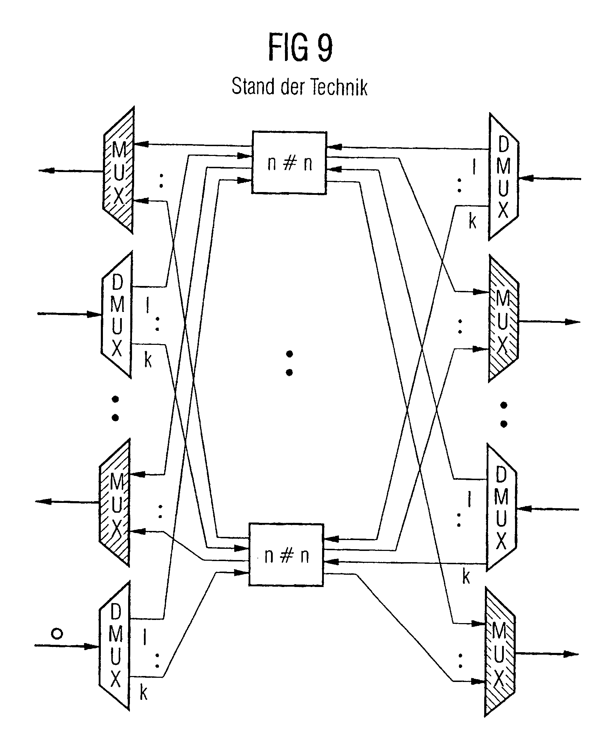

In "WDM Gridconnect - ein transparentes faseroptisches Kommunikationsnetz mit Faser- und Wellenlängenmultiplex" von Hubert Anton Jäger, erschienen im Hartung-Gorre-Verlag, Konstanz 1998 wird ein herkömmliches optisches Cross-Connect (OXC) beschrieben. Ein solches optisches Cross-Connect (OXC) mit optischen n x n Raumschaltfeldern mit n einlaufenden bidirektionalen Mehrwellenlängensignalen mit jeweils k Wellenlängen ist in **Figur 9** dargestellt. Hierbei wird das optische Mehrwellenlängensignal in k Einwellensignale mittels optischen Wellenlängendemultiplexern DMUX zerlegt, die anschließend unter Verwendung optischer Raumschaltfelder der Dimension n x n zu einem beliebigen Ausgang des Raumschaltfeldes geschaltet werden. Die von den Ausgängen der Raumschaltfelder zusammenlaufenden Einwellensignale werden mittels eines Multiplexers MUX eingekoppelt und weitergeleitet.

Nachteilig ist der hohe materielle Aufwand, der bei der Herstellung dieser optischen Cross-Connects (OXC) entsteht. Für eine Schaltungsanordnung von beispielsweise 64 Wellenlängen pro Mehrwellenlängensignal und 4 bidirektionalen Leitungen werden 64 Raumschaltfelder der Dimension 4 x 4 benötigt. Daneben müssen pro Multiplexer MUX bzw. Demultiplexer DMUX 64 Lichtwellenleiterverbindungen zu den entsprechenden Raumschaltfeldern der Dimension n x n eingebaut werden und nochmals soviele von den Raumschaltfeldern zu den gegenüberliegenden Demultiplexern DMUX bzw. Multiplexern MUX.

Aus JP 1 023 479/US 5 963 685 ist ein Add-Drop-Modul beschrieben, das mehrere Reflexionsfilter enthält, deren Frequenzen durch mechanischen Druck und Temperaturänderung einstellbar sind.

Aus dem Patent US 5,706,375 ist ebenfalls eine Add-Drop-Einrichtung angegeben, dessen Filter unterschiedliche und zueinander unsymmetrische Flanken aufweisen. Durch das wellenlängenmäßige Abstimmen der Filter kann ein vollständiges Durchschalten, vollständiges Reflektieren oder ein teilweises Durchschalten und Reflektieren erreicht werden. Bei dieser Lösung wird eine doppelte Anzahl von Filtern und Einstelleinrichtungen benötigt. Die Neueinstellung der Wellenlänge während des Betriebs führt aber zu Störungen der anderen Signale. Die Merkmale des Ober-begriffs von Anspruch 1 sind aus diesem Dokument bekannt.

In der europäischen Patentanmeldung EP 0854 378 A2 ist ein Thermo-optisches Bauelement beschrieben, das einen Splitter und ein abstimmbares Grating-Filter aufweist. Die Anordnung arbeitet als optischer Schalter und kann zur Realisierung von Add-Drop-Funktionen eingesetzt werden.

Aus dem Patent US 5,408,319 ist ein optischer Demultiplexer beschrieben, bei dem eine Abstimmung auf eine bestimmte Wellenlänge nicht mehr mechanisch sondern durch Temperaturänderung vorgenommen wird.

In der Patentanmeldung WO 98/04854 ist ein Add-Drop-Modul beschrieben, der durch Heizstreifen oder Feldplatten abgestimmt werden kann.

Auch aus WO 99/42893 ist abstimmbarer Add-Drop-Multiplexer bekannt. Zur Abstimmung der Wellenlänge wird der Brechungsindexes des Filtermaterials beispielsweise durch Beizen geändert.

Zur Realisierung einer Add-Drop-Continue-Funktion sind die Bekannten Prinzipien wenig geeignet oder zu aufwändig.

Aufgabe der Erfindung ist es, einen Add-Drop-Continue-Modul mit geringer Dämpfung und ein zu dessen Realisierung geeignetes Filter anzugeben, dessen Durchlaßverhalten veränderbar ist. Dieser Modul soll auch das Umkonfigurieren von Kanälen ermöglichen, ohne Störungen zu verursachen.

Eine weitere Aufgabe der Erfindung ist es, eine Schaltungsanordnung mit Cross-Connect-Funktionalität anzugeben, die eine einfache Zuordnung von dynamisch zusammengestellter Mehrwellenlängenbündeln zu verschiedenen Leitungen erlaubt. Eine weitere Aufgabe der Erfindung ist es, eine Schaltungsanordnung mit Cross-Connect-Funktionalität anzugeben, die eine reduzierte Komplexität des Systems erlaubt. Auch hierbei soll das Umkonfigurieren von Kanälen ermöglicht werden, ohne Störungen zu verursachen.

Die Aufgabe wird durch ein in Anspruch 1 angegebenes Filter, ein in Anspruch 8 angegebenes Add-Drop-Continue-Modul und ein "Cross-Connect-Modul" zur Realisierung von gebündelter Cross-Connect-Funktionalität nach den Ansprüchen 12 - 14 gelöst. Außerdem sind Varianten dieses Moduls angegeben.

Vorteilhafte Weiterbildungen sind in abhängigen Ansprüchen angegeben.

Der besondere Vorteil des Moduls und der Schaltungsanordnung zur Realisierung von gebündelter Cross-Connect-Funktionalität beruht auf dem Filter, dessen Frequenz und Dämpfung variiert werden kann. Hierdurch ist nicht nur die Auswahl unterschiedlicher Kanäle möglich; zur Realisierung von Add-Drop-, Drop-Continue- oder Cross-Connect-Funktion sind keine optischen Schalter erforderlich. Eine Umkonfiguration des Netzes kann ohne Störung benachbarter Signale erfolgen.

Insbesondere wird die Erfindung durch ein optisches Filter gelöst, bei dem eine Einrichtung (HE) zur Einstellung des Übertragungsverhaltens durch eine gezielte Änderung der Temperatur vorgesehen ist. Durch die Einstellung des Übertragunsverhaltens durch Temperaturänderungen kann erreicht werden, daß das optische Filter nichtdestruktiv rekonfigurierbar wird, was bei rein optischen Netzelementen bisher nur mit einer kostenaufwendigen optischen Schaltungstechnik möglich war (Wellenlängen-Multiplexer, Demultiplexer, Raumschaltmatritzen). Im Gegensatz zu herkömmlichen Wellenlängenfiltern ist bei dem erfindungsgemäßen optischen Filter neben der Resonanz-Wellenlänge zusätzlich die Transmissionsdämpfung einstellbar.

Bei einem weiteren bevorzugten Ausführungsbeispiel des optischen Filters sind in einem lichtdurchlässigen Material mindestens zwei Bereiche (B1, B2) wesentlich an der optischen Wellenführung und der Filterwirkung beteiligt, die unterschiedliche temperaturabhängige Brechzahlen n₁ (t) und n₂ (t) aufweisen und bei dem die Differenz der Brechzahlen n₁ (t) und n₂ (t) bei einer Temperatur innerhalb des temperaturmäßig steuerbaren Arbeitsbereiches zumindest annähernd Null ist. Damit wird durch die gezielte Änderung der Temperatur die temperaturabhängige Brechzahldifferenz zweier optischer Materialien beeinflußt. Diese Ausnutzung des thermo-optischen Effekts zur Beeinflussung der Resonanzgüte wird über die Einstellung der Resonanz-Wellenlänge λₖ und die Transmissionsdämpfung d für diese Wellenlänge bewerkstelligt. Das Reflexionsmaß ergibt sich aus Gründen der Energieerhaltung im Idealfall direkt aus dem Transmissionsverhalten. Energieanteile, die nicht transmitiert werden, werden zwangsläufig reflektiert. Die Resonanz-Wellenlänge λₖ wird im wesentlichen durch die Periodenlänge A der Grenzschichte beeinflußt. Die Transmissionsdämpfung ist (neben der Gitterlänge Z und der Gitteramplitude) im wesentlichen durch die Brechzahldifferenz n₁ - n₂ gegeben.

Vorteilhafterweise ist das erfindungsgemäße optische Filter in Planartechnik ausgeführt. Hierdurch wird die Integration in bestehende Schaltkreise erleichtert. Weiterhin bevorzugt wird das optische Filter als Fasergitter realisiert. Auch beim Fasergitter ist die Brechzahldifferenz zwischen zwei an der Wellenführung beteiligten optischen Schichten von wesentlicher Bedeutung. So kann das hier angewandte Prinzip der Beeinflussung der Transmissionsdämpfung durch thermische Brechzahländerung auch bei solchen Filtern bevorzugt eingesetzt werden.

Besonders bevorzugt ist ein optisches Filter als abstimmbares Bandsperrenfilter ausgeführt. Dadurch wird die Auskopplung eines Frequenzbandes ermöglicht. Dies ist besonders in rein optischen Telekommunikationsnetzen vorteilhaft.

Besonders bevorzugt erfolgt die Abstimmung des Bandsperrenfilters durch mechanischen Druck, Zug oder Biegung. Auf diese Weise läßt sich die zu filternde Wellenlänge des optischen Spektrums auswählen, indem das Bandsperrenfilter mechanischer Beeinflussung ausgesetzt wird.

Weiterhin wird die Erfindung gelöst durch einen Add-Drop-Continue-Modul mit einem erfindungsgemäßen optischen Filter, bei dem das abstimmbare optische Filter (BSF) zwischen einer Abzweigeeinrichtung (ZI1) für optische Signale und einer Einfügeeinrichtung (ZI2, KO) angeordnet ist. Auf diese Weise läßt sich mit einem erfindungsgemäßen optischen Filter ein Add-Drop-Continue-Modul aufbauen. In der Abzweigeeinrichtung für optische Signale wird das Signal aufgeteilt und ein Anteil auf das Tor des erfindungsgemäßen optischen Filters geleitet. Der auszukoppelnde Anteil wird reflektiert und weitergeleitet, während der einzukoppelnde Anteil über die Einfügeeinrichtung (ZI2, KO) eingefügt wird.

Bei einem weiteren bevorzugten Add-Drop-Continue-Modul der vorliegenden Erfindung sind mehrere optische Filter (BSF1 bis BSFM) zwischen einer Abzweigeeinrichtung (ZI1) für optische Signale und einer Einfügeeinrichtung (ZI2, KO) angeordnet. Auf diese Weise ist es möglich, mehrere individuell einstellbare optischen Spektren aus dem Signal auszukoppeln und besonders bevorzugt über Multiplexer bzw. Demultiplexer ein- bzw. wieder auszukoppeln.

Bei einem weiteren bevorzugten Add-Drop-Continue-Modul der vorliegenden Erfindung sind als Abzweigeeinrichtungen (ZI1) und als Einfügeeinrichtung (ZI2) Zirkulatoren vorgesehen. Auf diese Weise läßt sich die Ein- und Auskopplung der Signale mit bekannten Bauelementen realisieren. Bevorzugt werden hierfür Dreierzirkulatoren eingesetzt. Besonders bevorzugt werden Viererzirkulatoren eingesetzt. Es ist auch möglich, Machzehnderstrukturen zu verwenden.

Besonders bevorzugt wird die Aufgabe der vorliegenden Erfindung durch eine Add-Drop-Continue-Einrichtung gelöst, bei der mehrere in Reihe geschaltete Add-Drop-Module der vorliegenden Erfindung vorgesehen sind. Auf diese Weise ist es möglich, in rein optischen Netzwerken unterschiedlichste Schaltungsaufgaben zu realisieren.

Bei einem weieren bevorzugten Drop-and-Continue-Modul mit einem erfindungsgemäßen optischen Filter ist das optische Filter einer Abzweigeeinrichtung für optische Signale nachgeschaltet. Auf diese Weise ist es möglich, die Drop-and-Continue-Funktionalität mit rein optischen Bauelementen zu realisieren.

Weiterhin wird die Aufgabe gelöst durch einen Cross-Connect-Modul, der mindestens ein erfindungsgemäßes optisches Filter umfaßt. Auf diese Weise ist es möglich, einen Cross-Connect-Modul bereitzustellen, bei dem die Rekonfigurierbarkeit nicht-destruktiv erfolgen kann. Durch die Möglichkeit der Steuerung des Übertragungsverhaltens des optischen Filters durch gezielte Änderung der Temperatur kann die Filterwirkung des optischen Filters durch die entsprechende Temperaturwahl ausgesetzt werden. In diesem Augenblick stört das Filter keinerlei benachbarte Kanäle, da keine Reflexion stattfindet. Jetzt kann vorteilhafterweise eine Abstimmung des Filters erfolgen. Bei der Änderung des optischen Spektrums werden benachbarte optische Spektren überstrichen, ohne daß dies einen Effekt auf die ebenfalls in diesem Kreis transportierbaren Signale auf diesen optischen Spektren hätte. So kann ein neuer Kanal ausgewählt werden, ohne die hierbei zu überstreichenden Kanäle bzw. den Signalfluß hierauf zu beeinflussen oder gar zu stören. Nach Erreichen des gewünschten neuen Spektrums bzw. Kanals wird die Rekonfiguration dadurch abgeschlossen, daß die Temperatur wieder so eingestellt wird, daß die Filterwirkung wieder eintritt. Bevorzugt wird dies dadurch erreicht, daß durch die Temperaturänderung die Brechzahlendifferenz (n₁ - n₂) vom Betrag her wieder größer als Null wird.

Bei einem bevorzugten Cross-Connect-Modul der vorliegenden Erfindung ist mindestens ein Add-and-Drop-Modul umfaßt. Auf diese Weise ist es möglich, den Cross-Connect-Modul aus Addand-Drop-Modulen aufzubauen.

Bei einem weiteren bevorzugten Cross-Connect-Modul der vorliegenden Erfindung weist dieser mindestens einen Viererzirkulator und/oder mindestens eine Mach-Zehnder-Struktur auf. Auf diese Weise ist es möglich, die Anzahl der eingesetzten Zirkulatoren zu reduzieren.

Bevorzugt ist eine Cross-Connect-Einrichtung vorgesehen, bei der mehrere in Reihe geschaltete Cross-Connect-Module der vorliegenden Erfindung vorgesehen sind. Auf diese Weise ist es möglich, die Schaltungsanordnungen zu kaskadieren und so noch mehr Linien miteinander zu verschalten.

Bei einem bevorzugten Verfahren der vorliegenden Erfindung zur nicht-destruktiven Abstimmung eines Filters verliert das Filter durch eine erste Temperaturänderung seine Filtereigenschaft, dann erfolgt die Abstimmung des Filters und dann erlangt das Filter durch eine zweite Temperaturänderung seine Filtereigenschaft wieder zurück. Mit diesem Verfahren wird die Nicht-destruktive-Rekonfigurierbarkeit rein optischer Netzelemente möglich. Durch die Ausnutzung des thermooptischen Effekts zur Beeinflussung der Resonanzgüte des Filters ist es möglich, das Filter durch eine erste Temperaturänderung so einzustellen, daß es seine Filtereigenschaft verliert. Bevorzugt erfolgt dies dadurch, daß die temperaturabhängigen Brechzahlindizes so eingestellt werden, daß die Differenz Null ergibt. Solange das Filter hierdurch "ausgeschaltet" ist, kann die Abstimmung des Filters erfolgen, ohne daß benachbarte bzw. überstrichene Kanäle beeinflußt werden. Ist der neue Kanal erreicht, d. h. das Filter auf das neue optische Spektrum abgestimmt, wird das Filter durch eine zweite Temperaturänderung wieder "eingeschaltet". Hierbei wird bevorzugt die Temperatur so geändert, daß die Brechzahlindizes wieder eine vorbestimmte Differenz aufweisen. Auf diese Weise ist ein Verfahren zur Nichtdestruktiven-Rekonfigurierbarkeit rein optischer Netzelemente, insbesondere des erfindungsgemäßen Filters, bereitgestellt worden.

Besonders bevorzugt werden die optischen Filter der vorliegenden Erfindung zur Realisierung einer Schaltung mit Add-and-Drop-Funktionalität; und/oder einer Schaltung mit Drop-and-Continue-Funktionalität; und/oder einer Schaltung mit Multicast-Funktionalität; und/oder einer Schaltung mit Dual-Homing-Funktionalität; und/oder einer Schaltung mit Cross-Connect-Funktionalität verwendet. Multicast ist das gezielte Verbinden mehrerer ausgewählter Empfänger mit einem Sender (auch als Gruppenruf bezeichnet). Dual Homing ist der Anschluß eines Empfängers über zwei verschiedene Netzelemente und Wege. Auf diese Weise ist es möglich, rein optische Netzelemente bereitzustellen, die die oben bezeichneten Funktionalitäten aufweisen und dabei nicht-destruktiv abstimmbar bzw. rekonfigurierbar sind.

Die Erfindung und weitere vorteilhafte Merkmale werden anhand von Ausführungsbeispielen näher beschrieben.

Es zeigen:
Figur 1 einen Add-Drop-Continue-Modul,
Figur 2 einen erfindungsgemäßen Add-Drop-Continue-Modul,
Figur 3 eine Variante dieses Add-Drop-Continue-Moduls,
Figur 4 einen möglichen Filteraufbau,
Figur 5 das Übertragungsdiagramm des Bandsperrenfilters,
Figur 6 das Übertragungsdiagramm des Bandsperrenfilters bei Drop-and-Continue-Funktion,
Figur 7 eine Add-Drop-Continue-Einrichtung mit einer Reihenschaltung mehrerer Add-Drop-Continue-Module,
Figur 8 eine Variante zum gleichzeitigen Auskoppeln/Einkoppeln mehrerer WDM-Kanäle,
Figur 9 einen herkömmlichen optischen Cross-Connect-Moduls (OXC) mit optischen n x n Raumschaltfeldern,
Figur 10 eine schematische Darstellung eines Cross-Connect-Moduls in WDM-Systemen,
Figur 11 kaskadierte Cross-Connect-Module,
Figur 12 eine erfindungsgemäße Schaltungsanordnung eines Cross-Connect-Moduls,
Figur 13 eine weitere erfindungsgemäße Schaltungsanordnung eines Cross-Connect-Moduls.

Der in **Figur 1** dargestellte Add-Drop-Continue-Modul wurde bereits in der Beschreibungseinleitung erläutert. Auf den Splitter SP und den optischen Schalter SW kann verzichtet werden, wenn ein abstimmbares Filter verwendet wird, das eine Resonanzdämpfung aufweist, so daß ein bestimmter Anteil, beispielsweise die Hälfte der Energie eines optischen Signals, reflektiert wird und der restliche Anteil über den zweiten Zirkulator weiter gesendet wird.

In **Figur 2** ist ein solcher Add-Drop-Continue-Modul dargestellt. Dieser enthält einen ersten Zirkulator ZI1, ein abstimmbares Filter BSF und einen zweiten Zirkulator ZI2. Die Durchlaßfrequenz des Filters kann kontinuierlich geändert werden. Hierdurch kann der Modul für mehrere Wellenlängen eingesetzt werden.

Die Dämpfung des Filters kann durch gezielte Änderung der Temperatur geändert werden, so daß ein Signalbereich Dₖ von dem Filter reflektiert und abgezweigt wird und der andere Signalanteil Cₖ durchgeschaltet wird. Mit demselben Element kann also zwischen der Add-Drop-Funktion und der Drop-and-Continue-Funktion umgeschaltet werden, ohne daß optische Schalter erforderlich sind. Bei der Drop-and-Continue-Funktion (in Figur 2 dargestellt) wird natürlich kein Signal eingefügt.

In **Figur 3** ist eine Variante des Add-Drop-Continue-Moduls dargestellt, bei dem der zweite Zirkulator durch einen Koppler KO ersetzt wurde. Diese Variante ist zwar kostengünstiger, der Koppler weist jedoch eine höhere Dämpfung auf.

Soll nur die Drop-and-Continue-Funktion realisiert werden, kann in einem Drop-and-Continue-Modul natürlich auf den zweiten Zirkulator bzw. Koppler verzichtet werden.

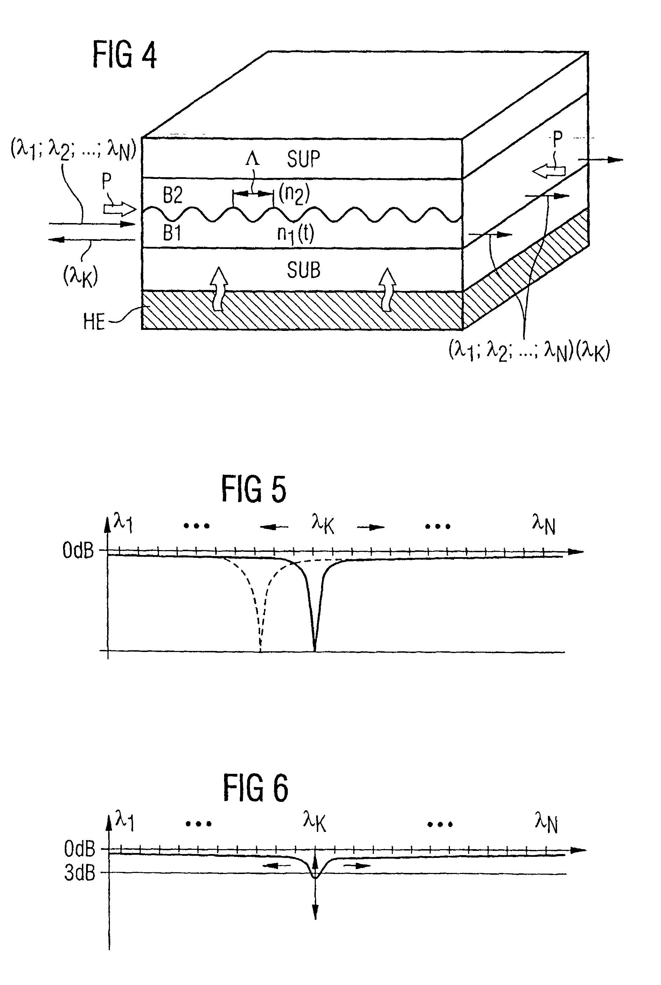

In **Figur 4** ist eine mögliche Realisierungsform des Filters in Planartechnik dargestellt. Das Filter besteht aus einem lichtleitenden Material, in der Regel Quarzglas, und wird im wesentlichen gebildet aus einem ersten Bereich B1 mit einer temperaturabhängigen Brechzahl n₁ (t), (t - Temperatur), in dem der wesentliche Energieanteil des Lichts geführt wird, und einem zweiten Bereich B2 mit einer anderen temperaturabhängigen Brechzahl n₂ (t). In weiteren Bereichen, Substrat SUB und Superstrat SUP, werden nur unwesentliche Anteile des Lichts geführt. Diese sind daher an der Filterwirkung nur unwesentlich beteiligt. Die Grenzschicht zwischen den beiden Bereichen 1 und 2 besitzt eine Wellenstruktur der Periodenlänge λ, die durch geeignete Diffusion oder mechanische Bearbeitung (Grating) realisiert wurde. Diese geometrische Struktur besitzt bekannterweise ein wellenlängenselektives Transmissions- bzw. Reflexionsverhalten, welches in **Figur 5** dargestellt ist.

Die Resonanzwellenlänge λₖ wird im wesentlichen durch die Periodenlänge der Grenzschicht bestimmt; die Transmissionsdämpfung wird außer von der Gitterlänge und der Gitteramplitude im wesentlichen durch die Brechzahldifferenz n₁ - n₂ bestimmt.
Durch mechanischen Druck P kann die Resonanzwellenlänge λ_{K} verändert werden (strichliert in Figur 5 dargestellt). Wird beispielsweise ein Wellenlängen-Muiltiplexsignal λ₁, λ₂, ... λ_{N} (für die optischen Signale werden hier dieselben Bezeichnungen wie für die Wellenlängen verwendet) in das Filter eingespeist, so wird eine bestimmte Wellenlänge λ_{K} reflektiert, während alle anderen Wellenlängen mit sehr geringer Dämpfung weitergeleitet werden.

Durch ein Heizelement HE kann das Filter erwärmt werden, wodurch die Filterwirkung verringert und die Durchlaßdämpfung verkleinert wird. Durch das Einstellen eines Dämpfungswertes von ca. 3 dB, wie aus **Figur 6** ersichtlich, erfolgt die Realisierung einer Drop-and-Continue-Funktion.

Bei einer Neukonfiguration des Systems sollen andere optische Signale, die andere Wellenlängen aufweisen, abgezweigt werden. Dies ist mit dem vorstehend beschriebenen Filter möglich, ohne daß benachbarte optische Signale (bzw. benachbarte Multiplexkanäle) gestört werden. Durch Erwärmung wird zunächst die Filterwirkung aufgehoben, wodurch alle Signale durchgeführt werden. Dann erfolgt Abstimmung auf die neue Wellenlänge durch das Ausüben eines dieser Wellenlänge entsprechenden mechanischen Druckes und die anschließende Abkühlung zur Wiedererlangung der Filterfunktion, durch die jetzt ein anderes optisches Signal durchgeschaltet wird. Durch hier nicht dargestellte Regelschaltungen kann die Einstellung sehr genau erfolgen. Als Heiz- bzw. Kühlelement sind Peltier-Elemente verwendbar.

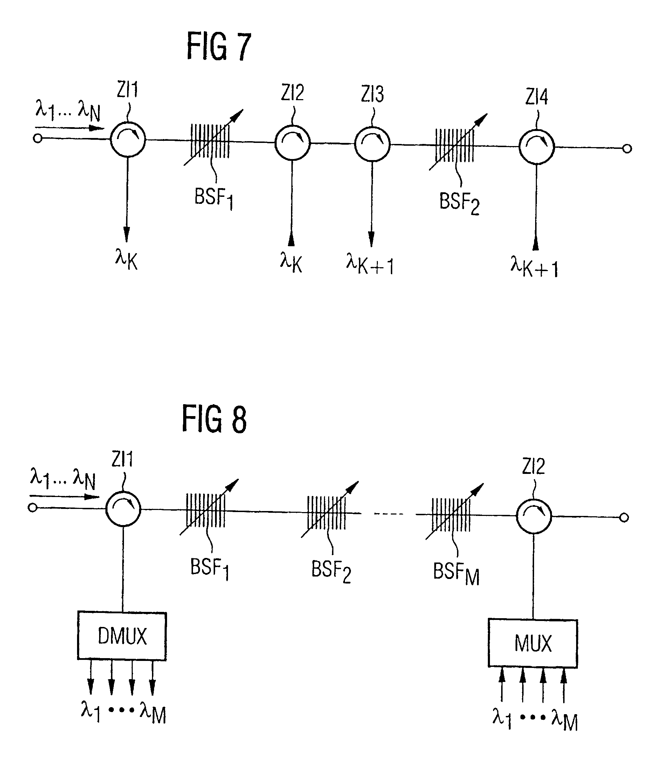

Diese Wellenlängenfilter sind aufgrund ihrer thermo-optischen Wirkungsweise noch relativ träge. Es können aber jetzt bereits Umschaltzeiten von 10 ms bis 500 ms erwartet werden, was meist bei den selten durchgeführten Neukonfigurationen zulässig ist.
Um mehrere optische Signale λ_{K}, λ_{K+1} abzweigen und einkoppeln zu können, werden mehrere dieser Module Z1, BSF1, Z2, Z3, BSF2, Z4 entsprechend **Figur 7** in Reihe geschaltet.

Die **Figur 8** zeigt einen Add-Drop-Continue-Modul ZI1, BSF1, BSF2, BSF3, ZI2, bei dem zwischen zwei Zirkulatoren mehrere Bandsperrenfilter BSF1, BSF2, .. BSFM eingeschaltet sind. Entsprechend der Anzahl der Filter werden mehrere optische Signale λ₁ bis λ_{M} gleichzeitig eingekoppelt bzw. ausgekoppelt. Durch einen Demultiplexer DMUX oder einen Multiplexer MUX können einzelne Signale abgezweigt oder eingekoppelt werden.

Zu ergänzen ist noch, daß das Bandsperrenfilter auch mit einer größeren Bandbreite realisiert werden kann. Statt einzelner Kanäle können dann Kanalgruppen von behachbarten Kanälen aus- und eingekoppelt werden.

Die **Figur 9** zeigt eine Lösung für einen herkömmlichen optischen Cross-Connector (OXC) mit optischen n x n Raumschaltfeldern. Hierbei sind Demultiplexer DMUX über optische Leitungen mit einem Raumschaltfeld der Dimension n x n verbunden und diese wiederum mit Multiplexern MUX. Ein einkommendes optisches Mehrwellenlängensignal wird durch den Demultiplexer DMUX in ein Einwellenlängensignal zerlegt. Diese Einwellenlängensignale werden anschließend unter Verwendung optischer Raumschaltfelder der Dimension n x n geschaltet. Die weitergeschalteten Einwellenlängensignale der verschiedenen Raumschaltfelder treffen danach auf den Multiplexer MUX und werden dort zu einem Ausgangssignal rekombiniert.

Bei einer Schaltungsanordnung von z. B. 64 Wellenlängen pro Mehrwellenlängensignal und 4 bidirektionalen Leitung werden 64 Raumschaltfelder der Dimension 4x4 benötigt. Mit dieser Anordnung ist es möglich, jedes Einwellenlängensignal einer einkommenden Leitung in eine beliebige Ausgangsleitung zu schalten.

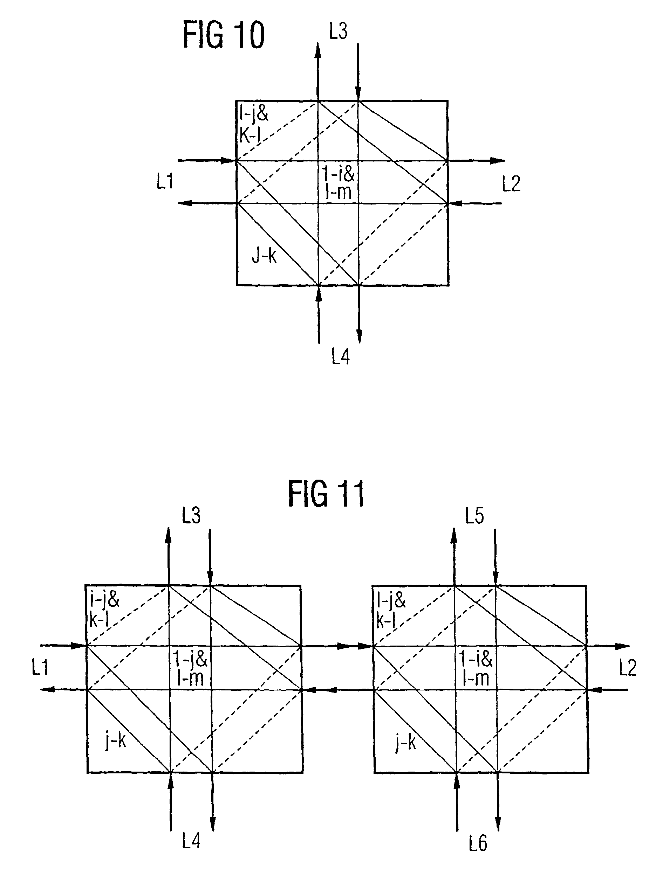

In **Figur 10** ist eine schematische Darstellung eines Cross-Connect-Moduls mit gebündelter Cross-Connect-Funktionalität in WDM-Systemen dargestellt. Hierbei kommen auf der Linie 1 Wellenlängen 1 bis n an. Die Wellenlängen 1 bis i und 1 bis m der Linie 1 und 2 werden miteinander verbunden, wobei m die maximale Anzahl der parallelen Wellenlängensignalen pro Faser des WDM-Systems beschreibt und i und 1 dynamisch änderbare Zahlen im Bereich 1 ≤ i ≤ l ≤ m sind. Für Linie 3 und 4 gilt gleiches analog. Diese Verbindung ist mit dem durchgezogenen Strich gekennzeichnet. Mit der gestrichelten Linie ist die Verbindung der Linie 1 und Linie 3 bzw. Linie 2 und Linie 4 für die Wellenlängen i bis j und k bis l dargestellt, wobei i, j, k, l dynamisch änderbare Zahlen im Bereich 1 ≤ i ≤ j ≤ j ≤ k ≤ l ≤ m sind.

Mit der gepunkteten Linie sind die Verbindungen der Linie 1 und 4 bzw. 3 und 2 dargestellt, bei denen die Wellenlängenbündel j bis k zusammengeschaltet werden, wobei i, j, k, l dynamisch änderbare Zahlen im Bereich 1 ≤ i ≤ j ≤ j ≤ k ≤ l ≤ m sind.

Mit dieser Schaltungsanordnung ist es möglich, Wellenlängenbündel in WDM-Systemen mit einer Cross-Connect-Funktionalität zu verschalten.

In Figur 11 sind in schematischer Darstellung kaskadierte Cross-Connect-Module dargestellt. Durch die Hintereinanderschaltung von Schaltungen der Figur 10 können umfassendere Cross-Connect-Funktionalitäten in WDM-Systemen realisiert werden. In Figur 11 sind zwei solcher Schaltungen kaskadiert worden; es ist ebenfalls möglich, weitere Schaltungen zu kaskadieren bzw. in der Doppelsterntopologie, in der Sterntopologie oder im vermaschten Netz einzusetzen.

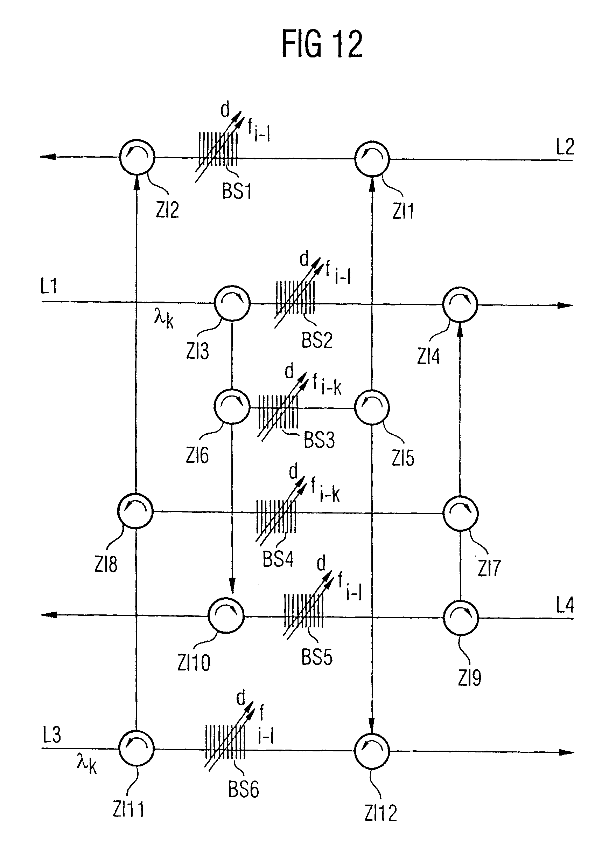

In **Figur 12** ist eine erfindungsgemäße Schaltungsanordnung mit gebündelter Cross-Connect-Funktionalität dargestellt. Es sind vier Leitungen L1 bis L4 dargestellt, die miteinander verschaltet werden können. Desweiteren sind Zirkulatoren ZI1 bis ZI12 vorgesehen. Es handelt sich hier um Dreierzirkulatoren. Desweiteren sind erfindungsgemäße optische Filter als Bandsperrenfilter BS1 bis BS6 vorgesehen.

Die Funktionweise der Schaltung soll anhand der Aufteilung der auf L2 ankommenden Signale gemäß der in Figur 10 dargestellten Cross-Connect-Funktionalität erläutert werden.

Das auf L2 einlaufende Mehrlängenwellensignal wird über den optischen Zirkulator ZI1 komplett in Pfeilrichtung auf das nächste Tor weitergeleitet und gelangt auf das optische Bandsperrenfilter BS1. Dieses Filter reflektiert die auszukoppelnden Wellenlängenkanäle OCH i bis 1, die übrigen Kanäle werden durchgelassen. Auf gleiche Weise werden die Wellenlängenkanäle i bis 1 aus der Linie 1, 3 und 4 ausgekoppelt.

Das auf L2 ausgekoppelte Mehrwellenlängensignal (i bis l) wird über den optischen Zirkulator ZI5 komplett in Pfeilrichtung auf das nächste Tor weitergeleitet und gelangt auf das optische Bandsperrenfilter BS3. Dieses Filter reflektiert die Wellenlängenkanäle OCH j bis k, die übrigen Kanäle werden durchgelassen. Das aus Linie 1 ausgekoppelte und an Zirkulator ZI6 weitergeleitete Mehrwellenlängensignal wird am gleichen optischen Bandsperrenfilter BS3 reflektiert. Die durchgelassenen Wellenlängenkanäle OCH i bis j und OCH k bis 1 werden dagegen am Bandsperrenfilter BS3 ausgetauscht. Nach dem gleichen Prinzip wird mit dem aus Linie 3 und Linie 4 ausgekoppelten Wellenlängenbündeln verfahren.

Das vom Zirkulator ZI5 kommende Mehrwellenlängensignal wird über den Zirkulator Z12 zur Linie L4 geführt. In ähnlicher Weise werden die von den Zirkulatoren ZI6, ZI7, ZI8 kommenden Mehrwellenlängensignale zur entsprechenden Linie geführt.

Die Bandsperrenfilter BS1 bis BS6 sind breitbandig ausgelegt, so daß sie mehrere Wellenlängenkanäle umfassen. Liegt einer der Filterflanken außerhalb des Wellenlängenspektrums, so kann damit eine Hochpaß- oder Tiefpaß-Funktion realisiert werden. Die Auswahl eines Wellenlängenbündels erlaubt der Einstellparameter f am Bandsperrenfilter, der mit den entsprechenden Indizes gekennzeichnet ist. Die "Neutralisierung" des Filters bevorzugt bei Umkonfigurationen kann mit der Durchgangsdämpfung d durchgeführt werden.

Durch den Einsatz der erfindungsgemäßen optischen Filter in dieser Schaltungsanordnung können variable komplette Wellenlängenbündel aus einem Mehrwellenlängensignal ausgekoppelt werden.

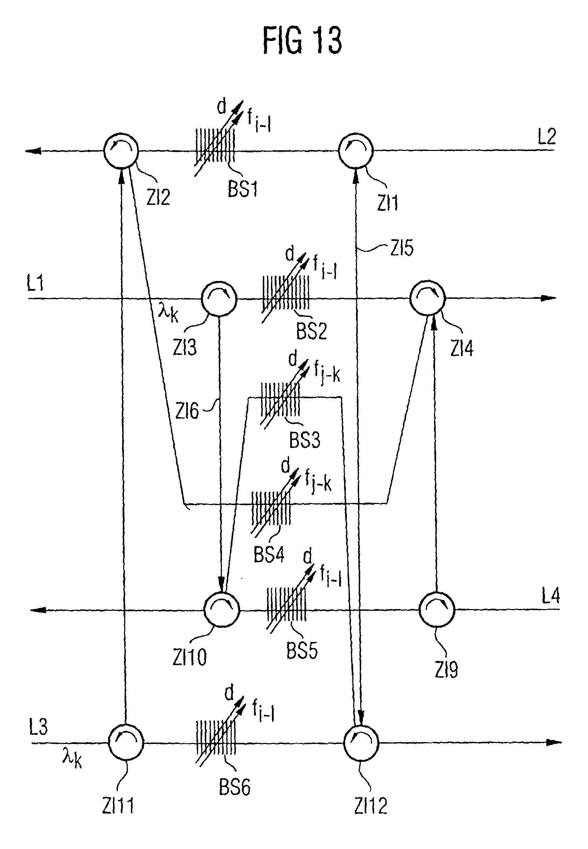

In **Figur 13** ist eine **Figur 12** ähnliche Schaltungsanordnung dargestellt, bei der die Dreierzirkulatoren durch Viererzirkulatoren ersetzt sind. Auf diese Weise ist es möglich, die eingesetzten 12 Zirkulatoren aus der Schaltungsanordnung gemäß **Figur 12** durch 8 Viererzirkulatoren zu ersetzen. Die Zirkulatoren können auch durch Machzehnderstrukturen ersetzt werden.

Auf diese Weise ist eine einfache Zuordnung von ausgewählten Mehrwellenlängenbündeln zu verschiedenen Mehrwellenlängenkanälen möglich. Die Komplexität des Systems reduziert sich im Vergleich zu Cross-Connect-Modulen des Standes der Technik gemäß **Figur 9** um so mehr, je größer die Anzahl der parallelen auszukoppelnden Wellenlängen pro Leitung ist. Bei einer Schaltungsanordnung von z. B. 64 Wellenlängen pro Mehrwellenlängensignal und 4 bidirektionalen Leitungen werden bei der Lösungsvariante mit Raumschaltfeldern und De-/Multiplexern 64 Raumschaltfelder der Dimension 4x4 benötigt, während bei der in Figuren 12 und 13 vorgeschlagenen Schaltungsanordnungen lediglich 6 Bandsperrenfilter eingesetzt werden müssen.

## Patentansprüche

1. Optisches Filter zur Realisierung einer Add-Drop- und einer Drop- und Continue-Funktion, das ein wellenlängenselektives Gitter mit temperaturabhängigen Retiexions- und Transmissionseigenschaften aufweist, und das eine Einrichtung (HE) zur Einstellung der Temperatur des Gitters aufweist, **dadurch gekennzeichnet, dass** die Einrichtung zur Einstellung der Temperatur (HE) derart ausgeführt ist, dass sie die Temperatur des Gitters zuerst so einstellt, dass das Gitter seine Filterwirkung verliert und anschließend so, dass von dem Gitter ein zum Abzweigen bestimmter Signalanteil reflektiert und ein anderer dieselbe Wellenlänge aufweisender Signalanteil durchgeschaltet wird.

2. Optisches Filter nach Anspruch 1,
**dadurch gekennzeichnet,**
**daß** in einem lichtdurchlässigen Material mindestens zwei Bereiche (B1 B2) wesentlich an der optischen Wellenführung und der Filterwirkung beteiligt sind, die unterschiedliche temperaturabhängige Brechzahlen n₁(t) und n₂(t) aufweisen und
**daß** die Differenz der Brechzahlen n₁(t) und n₂(t) bei einer Temperatur innerhalb des temperaturmäßig steuerbaren Arbeitsbereiches zumindest annähernd Null ist.

3. Optisches Filter nach Anspruch 2,
**dadurch gekennzeichnet,**
**daß** es in Planartechnik ausgeführt ist.

4. Optisches Filter nach einem der vorhergehenden Ansprüche,
**dadurch gekennzeichnet,**
**daß** es als abstimmbares Bandsperrenfilter ausgeführt ist.

5. Optisches Filter nach Anspruch 4,
**dadurch gekennzeichnet,**
**daß** seine Bandbreite auf die eines Übertagungskanals abgestimmt ist.

6. Optisches Filter nach Anspruch 4,
**dadurch gekennzeichnet,**
**daß** seine Bandbreite auf die Bandbreite mehrerer nebeneinandeliegender Übertagungskanäle festgelegt ist.

7. Optisches Filter nach Anspruch 4, 5 oder 6
**dadurch gekennzeichnet,**
**daß** die Abstimmung durch mechanischen Druck, Zug oder Biegung erfolgt.

8. Add-Drop-Continue-Modul mit einem optischen Filter (BSF) nach einem der Ansprüche 1 - 7,
**dadurch gekennzeichnet,**
**daß** das abstimmbare optische Filter (BSF) zwischen einer Abzweigeeinrichtung (ZI1) für optische Signale und einer Einfügeeinrichtung (ZI2, K0) angeordnet ist.

9. Add-Drop-Continue-Modul nach Anspruch 8,
**dadurch gekennzeichnet,**
**daß** mehrere optische Filter (BSF1 bis BSFM) zwischen einer Abzweigeeinrichtung (ZI1) für optische Signale und einer Einfügeeinrichtung (ZI2, K0) angeordnet sind.

10. Add-Drop-Continue-Modul nach Anspruch 8 oder 9,
**dadurch gekennzeichnet,**
**daß** als Abzweigeeinrichtung (ZI1) und/oder als Einfügeeinrichtung (ZI2) Zirkulatoren vorgesehen sind.

11. Add-Drop-Continue-Einrichtung,
**dadurch gekennzeichnet,**
**daß** mehrere Add-Drop-Continue-Module nach Anspruch 8, 9 oder 10 in Reihe geschaltet sind.

12. Cross-Connect-Modul mit mehreren Eingängen und mehreren Ausgängen,
**dadurch gekennzeichnet,**
**daß** es mindestens ein optisches Filter nach einem der Ansprüche 1 bis 7 aufweist.

13. Cross-Connect-Modul mit mehreren Eingängen und mehreren Ausgängen,
**dadurch gekennzeichnet,**
**daß** es mindestens ein Add-Drop-Continue-Modul nach einem der Ansprüche 8 bis 10 aufweist.

14. Cross-Connect-Modul nach Anspruch 13,
**dadurch gekennzeichnet,**
**daß** das Cross-Connect-Modul mindestens einen Viererzirkulator als Abzweigeinrichtung oder Einfügeeinrichtung aufweist.

15. Cross-Connect-Einrichtung,
**dadurch gekennzeichnet,**
**daß** es mehrere Cross-Connect-Module nach einem der Ansprüche 12 bis 14 aufweist.

16. Verfahren zur Abstimmung des nach einem der Ansprüche 1 bis 7 konzipierten Filters ohne Störung von durchgeführten Signalen, bei dem
das Filter durch eine erste Temperaturänderung so eingestellt wird, daß es seine Filtereigenschaft verliert, dann eine Abstimmung des Filters auf eine vorbestimmte neue Wellenlänge erfolgt und
anschließend das Filter durch eine weitere Temperaturänderung so eingestellt wird, daß es seine Filtereigenschaft bei der neu eingestellten Wellenlänge wieder erlangt.

17. Verwendung eines optischen Filters nach einem der vorhergehenden Ansprüche 1 bis 7 zur Realisierung einer Schaltung mit Add-and-Drop-Funktionalität und/oder einer Schaltung mit Drop-and-Continue-Funktionalität.

## Claims

1. Optical filter for producing an add-drop function and a drop-and-continue function, which has a wavelength-selective grating with temperature-dependent reflection and transmission characteristics, and which has a device (HE) for adjusting the temperature of the grating, **characterized in that** the device (HE) for adjusting the temperture is configured in such a way that the temperature of the grating is first of all adjusted so that the grating loses its filter action, and subsequently so that a specific signal component that is to be branched off is reflected by the grating and another signal component having the same wavelength is transmitted thereby.

2. Optical filter according to Claim 1, **characterized in that** at least two regions (B1, B2) in an optically transparent material, which have different temperature-dependent refractive indices n₁ (t) and n₂ (t), are essentially involved in the optical waveguiding and the filter action, and
**in that** the difference between the refractive indices n₁ (t) and n₂ (t) is at least approximately zero at one temperature within the temperature-controllable working range.

3. Optical filter according to Claim 2, **characterized in that** it is designed in planar technology.

4. Optical filter according to one of the preceding claims, **characterized in that** it is designed as a tunable band-stop filter.

5. Optical filter according to Claim 4, **characterized in that** its bandwidth is tuned to that of a transmission channel.

6. Optical filter according to Claim 4, **characterized in that** the bandwidth is tuned to the bandwidth of a plurality of adjacent transmission channels.

7. Optical filter according to Claim 4, 5 or 6, **characterized in that** the tuning is carried out by mechanical pressure, tension or bending.

8. Add-drop-continue module having an optical filter (BSF) according to one of Claims 1 to 7, **characterized in that** the tunable optical filter (BSF) is arranged between a branching device (ZI1) for optical signals and an insertion device (ZI2, K0).

9. Add-drop-continue module according to Claim 8, **characterized in that** a plurality of optical filters (BSF1 to BSFM) are arranged between a branching device (ZI1) for optical signals and an insertion device (ZI2, K0).

10. Add-drop-continue module according to Claim 8 or 9, **characterized in that** circulators are provided as the branching device (ZI1) and/or as the insertion device (ZI2).

11. Add-drop-continue device, **characterized in that** a plurality of add-drop-continue modules according to Claim 8, 9 or 10 are connected in series.

12. Cross-connect module having a plurality of inputs and a plurality of outputs, **characterized in that** it comprises at least one optical filter according to one of Claims 1 to 7.

13. Cross-connect module having a plurality of inputs and a plurality of outputs, **characterized in that** it comprises at least one add-drop-continue module according to one of Claims 8 to 10.

14. Cross-connect module according to Claim 13, **characterized in that** the cross-connect module comprises at least one quad circulator as the branching device or as the insertion device.

15. Cross-connect device, **characterized in that** it comprises a plurality of cross-connect modules according to one of Claims 12 to 14.

16. Method for tuning the filter designed according to one of Claims 1 to 7 without interfering with transmitted signals, in which the filter is adjusted in such a way, as a result of a first temperature change, that it loses its filter characteristic, tuning of the filter to a predetermined new wavelength is then carried out, and the filter is subsequently adjusted, as a result of a futher temperature change, in such a way that it regains its filter characteristic at the newly adjusted wavelength.

17. Use of an optical filter according to one of claims 1 to 7, for the production of
a circuit having add-and-drop functionality and/or
a circuit having drop-and-continue functionality.

## Revendications

1. Filtre optique destiné à réaliser une fonction Add-Drop et une fonction Drop-and-Continue, comportant une grille sélective aux longueurs d'onde, qui a des propriétés de réflexion et de transmission variables avec la température, et un dispositif (HE) destiné au réglage de la température de la grille
**caractérisé par le fait**
**que** le dispositif (HE), destiné au réglage de la température de la grille est conçu de telle sorte qu'il règle la température de la grille, d'abord, de telle sorte que la grille perd son effet filtrant et, ensuite, de telle sorte qu'une fraction de signal déterminée par la grille pour être dérivée est réfléchie et qu'une autre fraction de signal ayant la même longueur d'onde est retransmise.

2. Filtre optique selon la revendication 1
**caractérisé par le fait**
**que**, dans une matière transparente à la lumière, au moins deux zones (B1, B2) participent essentiellement au guidage optique des ondes et à l'effet filtrant, ces deux zones ayant des indices de réfraction n₁(t) et n₂(t), différents et variables en fonction de la température, et
**que** la différence entre les indices de réfraction n₁(t) et n₂(t) est au moins approximativement nulle à une température qui se trouve à l'intérieur de la plage de travail, qui peut être contrôlée par la température.

3. Filtre optique selon la revendication 2
**caractérisé par le fait**
**qu'**il est réalisé en technologie planaire.

4. Filtre optique selon l'une des revendications précédentes
**caractérisé par le fait**
**qu'**il est réalisé en tant que filtre réglable à suppression de bande.

5. Filtre optique selon la revendication 4
**caractérisé par le fait**
**que** sa largeur de bande est accordée sur celle d'un canal de transmission.

6. Filtre optique selon la revendication 4
**caractérisé par le fait**
**que** sa largeur de bande est fixée sur la largeur de bande de plusieurs canaux de transmission juxtaposés les uns aux autres.

7. Filtre optique selon la revendication 4, 5 ou 6
**caractérisé par le fait**
**que** l'accord se fait par pression, traction ou flexion mécaniques.

8. Module Add-Drop-Continue avec un filtre optique (BSF) selon l'une des revendications 1 - 7
**caractérisé par le fait**
**que** le filtre optique réglable (BSF) est disposé entre un dispositif d'extraction (ZI1) pour signaux optiques et un dispositif d'insertion (ZI2, KO).

9. Module Add-Drop-Continue selon la revendication 8
**caractérisé par le fait**
**que** plusieurs filtres optiques (BSF1 à BSFM) sont disposés entre un dispositif d'extraction (ZI1) pour signaux optiques et un dispositif d'insertion (ZI2, KO).

10. Module Add-Drop-Continue selon la revendication 8 ou 9
**caractérisé par le fait**
**que** des circulateurs sont prévus comme dispositif d'extraction (ZI1) et/ou comme dispositif d'insertion (Z12).

11. Module Add-Drop-Continue
**caractérisé par le fait**
**que** plusieurs modules Add-Drop-Continue selon la revendication 8, 9 ou 10 sont connectés en série.

12. Module d'interconnexion à plusieurs entrées et plusieurs sorties
**caractérisé par le fait**
**qu'**il comporte au moins un filtre optique selon l'une des revendications 1 à 7.

13. Module d'interconnexion à plusieurs entrées et plusieurs sorties
**caractérisé par le fait**
**qu'**il comporte au moins un module Add-Drop-Continue selon l'une des revendications 8 à 10.

14. Module d'interconnexion
**caractérisé par le fait**
**que** le module d'interconnexion comporte au moins un circulateur à quatre voies en tant que dispositif d'extraction ou dispositif d'insertion.

15. Module d'interconnexion
**caractérisé par le fait**
**qu'**il comporte plusieurs modules d'interconnexion selon l'une des revendications 12 à 14.

16. Procédé destiné au réglage, sans perturber les signaux qui traversent directement, du filtre conçu selon l'une des revendications 1 à 7, au cours duquel
le filtre est réglé par une première modification de température de telle sorte qu'il perd sa propriété filtrante,
puis a lieu un réglage du filtre sur une nouvelle longueur d'onde prédéterminée et, ensuite, le filtre est réglé, par une autre modification de température, de telle sorte qu'il récupère sa propriété filtrante à la longueur d'onde nouvellement réglée.

17. Utilisation d'un filtre optique selon l'une des revendications précédentes 1 à 7 en vue de réaliser un circuit ayant une fonctionnalité Add-and-Drop et/ou un circuit ayant une fonctionnalité Drop-and-Continue.
